(19) Europäisches Patentamt
European Patent Office
Office européen des brevets

(11) **EP 2 877 434 B1**

(12) **FASCICULE DE BREVET EUROPEEN**

(45) Date de publication et mention
de la délivrance du brevet:
**11.07.2018 Bulletin 2018/28**

(21) Numéro de dépôt: **13756596.6**

(22) Date de dépôt: **25.07.2013**

(51) Int Cl.:
**C03C 17/00** [(2006.01)]

(86) Numéro de dépôt international:
**PCT/FR2013/051787**

(87) Numéro de publication internationale:
**WO 2014/016518 (30.01.2014 Gazette 2014/05)**

(54) **VERRE LAQUÉ TREMPABLE**

TEMPERBARES EMAILLIERTES GLAS

TEMPERABLE ENAMELLED GLASS

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **27.07.2012 FR 1257307**

(43) Date de publication de la demande:
**03.06.2015 Bulletin 2015/23**

(73) Titulaire: **Saint-Gobain Glass France
92400 Courbevoie (FR)**

(72) Inventeurs:
• **CLABAU, Frédéric
F-75013 Paris (FR)**
• **GARNIER, Louis
F-75020 Paris (FR)**
• **RACHET, Vincent
F-92120 Montrouge (FR)**

(74) Mandataire: **Saint-Gobain Recherche
Département Propriété Industrielle
39 Quai Lucien Lefranc
93300 Aubervilliers (FR)**

(56) Documents cités:
US-A- 1 941 990      US-A- 4 514 456
US-A- 5 510 188      US-A- 5 702 520
US-B1- 6 428 616

EP 2 877 434 B1

## Description

La présente invention a pour objet un substrat en verre ou en vitrocéramique laqué trempable, destiné à être utilisé dans le domaine du bâtiment intérieur et/ou extérieur, ainsi que son procédé de fabrication. Le verre laqué est notamment destiné à décorer les murs de bâtiment ou des façades de meubles.

Il existe actuellement deux types principaux de revêtement permettant d'obtenir un verre laqué dont l'aspect est opaque et coloré. Le premier consiste à revêtir le substrat en verre d'une peinture organique, comprenant principalement le mélange d'une résine et de pigments organiques ou inorganiques. Le second consiste à faire fondre sur le substrat à revêtir un émail, obtenu à partir de fritte de verre, de pigments inorganiques et d'une résine qui disparait lors du chauffage.

Le principal inconvénient des revêtements à base de peinture organique réside dans le fait que des substrats ainsi revêtus ne peuvent plus subir de trempe thermique. Par trempe thermique, on comprend que le substrat est chauffé à une température supérieure à 600°C sous air pendant quelques minutes, avant de subir un refroidissement rapide. Ces conditions sont beaucoup trop agressives pour les revêtements organiques, qui se dégradent alors en composés élémentaires (carbone, dioxyde de carbone...).

Après une trempe thermique, la résistance mécanique du verre est considérablement accrue. Le verre trempé présente en outre l'avantage de se fragmenter en une multitude de petits éclats non coupants en cas de brisure. Les verres revêtus de peinture organique ne peuvent donc pas avoir ces propriétés (notamment la norme de sécurité EN 12150-1 :2000), à moins d'appliquer la peinture sur un verre préalablement trempé, et donc un verre aux dimensions définitives puisque celui-ci ne peut plus être découpé sans casser. Comme les grandes séries sont peu communes dans l'habitat intérieur où les dimensions sont souvent propres au client, les peintures organiques sont surtout dédiées aux verres non-trempés, aux propriétés mécaniques moindres.

L'inconvénient de l'émail est que la couche déposée sur le substrat possède avant fusion une très faible résistance mécanique et hydrolytique. Il n'est donc pas possible de transporter, stocker, découper, border ou laver un verre revêtu d'un émail tant qu'il n'a pas été chauffé à haute température, typiquement au-delà de 600°C, et que la couche déposée ne fonde. Or, à moins de réaliser une étape supplémentaire de détrempe, on ne peut plus transformer un verre trempé. Par conséquent, l'émail doit impérativement être déposé sur des panneaux aux dimensions définitives. Comme déjà décrit, ce type de produit est peu adapté à l'habitat intérieur où les dimensions sont souvent propres au client.

Pour augmenter la tenue mécanique de l'émail non fondu, la demande de brevet WO 2007/104752 décrit un système bi-couche dans lequel une couche de résine est déposée sur une couche d'émail. Ce système nécessite de nombreuses étapes industrielles puisqu'il faut consolider la première couche avant de pouvoir déposer la seconde. Il existe également un risque important de dégradation de la couche d'émail lors du dépôt de la couche de résine. Enfin, la quantité de résine dans ce système bi-couche est relativement importante et il est difficile d'éliminer la totalité de la résine introduite lors de la trempe, ce qui peut provoquer l'apparition de traces noires sur le substrat revêtu. La demande de brevet WO 2011/095471 propose ainsi un procédé de trempe particulier pour ce type de système.

Une autre possibilité envisagée pour améliorer la tenue mécanique de l'émail non fondu consiste à augmenter la quantité de résine. On peut citer par exemple les demandes WO 2007/135192 ou WO2011/051459. Le principal problème de ces couches est une faible adhésion au verre en présence d'eau, ce qui conduit fréquemment à une délamination de la couche colorée lors des étapes classiques de bordage ou de perçage du substrat revêtu. Un second problème potentiel est l'apparition de flammes dans le four de trempe, à même de dégrader les résistances chauffantes du four.

Parallèlement à ces deux solutions techniques, la demande de brevet WO 2006/111359 décrit le dépôt d'une couche sol-gel contenants des pigments sur des substrats en verre. Le problème de ces systèmes est l'opacité, puisqu'il est connu que les couches sol-gel ont tendance à craqueler dès que leur épaisseur dépasse quelques microns. Or l'opacité recherchée pour les applications souhaitées n'est pas obtenue pour de telles épaisseurs. Il est en fait nécessaire de déposer une couche opacifiante supplémentaire, ce qui ne fait que déplacer le problème de la résistance à la trempe et de la tenue mécanique avant trempe du verre laqué.

Le brevet US-5,510,188 décrit l'application sur verre d'une composition comprenant notamment un pigment, une solution de silicate d'alcalins et du feldspath. L'application de ce revêtement nécessite un chauffage en deux étapes, l'étape de durcissement final étant réalisée à une température comprise entre 500 et 760°C. Ce traitement à haute température est nécessaire pour obtenir les propriétés d'adhésion et de résistance désirées.

Dans l'objectif de remplacer les émaux, les brevets EP 0 815 176 et EP 0 946 654 décrivent des compositions de peinture à base de silicate d'alcalins présentant une bonne adhésion au verre grâce à la présence de poudre de fritte de verre à bas point de fusion et/ou d'oxyde de zinc. Ce type de revêtement n'est complètement durci et ne présente l'adhésion souhaitée qu'après un chauffage à une température supérieure à 550°C. Par ailleurs la fritte de verre présente dans ces compositions peut conduire, en fondant lors du chauffage à haute température, à un emprisonnement des additifs ou impuretés organiques (surfactants, impuretés contenues dans les charges et pigments...). En brûlant partiellement, ces additifs ou impuretés organiques vont laisser des résidus noirs, et par conséquent, contraindre à n'utiliser que des peintures très foncées, ce qui est le cas dans les brevets cités ci-dessus.

On cherche par conséquent à mettre au point un substrat en verre ou en vitrocéramique laqué qui présente l'opacité recherchée, sans nécessiter un traitement du substrat revêtu à température élevée, tout en restant transportable, stockable, découpable, bordable, lavable et trempable. On cherche également à mettre au point un produit qui utilise une peinture de couleur potentiellement claire, dont la coloration ne change que très peu lors du processus de trempe thermique. C'est dans ce cadre que s'inscrit la présente invention.

Les inventeurs ont découvert qu'il était possible d'obtenir un verre laqué coloré opaque par application d'un revêtement minéral à base de silicate d'alcalin, qui atteint les performances recherchées en terme de couleur et de changement de couleur à la trempe, et en terme d'adhésion et de résistance mécanique à basse température sans nécessiter d'étape de cuisson à température élevée.

La présente invention décrit un substrat en verre ou en vitrocéramique laqué trempable muni sur une partie ou la totalité d'au moins une de ses faces d'une couche de revêtement opaque selon la revendication 1. Un autre objet de la présente invention est le procédé de fabrication d'un tel substrat laqué trempable.

La couche de revêtement déposée sur le substrat en verre ou en vitrocéramique est une peinture minérale à l'eau, à base de silicate d'alcalin, de préférence exempte de promoteur d'adhésion. La couche de peinture est directement appliquée sur le substrat, sans appliquer une quelconque sous-couche permettant d'améliorer l'adhésion

Les coordonnées colorimétriques L\*, a\* et b\* sont calculées en prenant en compte l'illuminant D65 et l'observateur de référence CIE-1931. Il s'agit de coordonnées colorimétriques obtenues par réflexion du côté du substrat, c'est-à-dire du côté de la face opposée au revêtement. La composante L\* définit la clarté, qui va de la valeur 0 pour le noir à la valeur 100 pour le blanc. Elle est mesurée en réflexion. Les composantes a\* et b\* représentent les gammes des couleurs.

La clarté de la couche de revêtement est de façon préférée telle que la valeur de L\* mesurée en réflexion est supérieure à 50.

Le substrat ainsi revêtu présente les caractéristiques recherchées avant de subir une trempe thermique. Il est donc transportable, stockable, découpable, bordable et lavable, directement après le séchage de la couche de revêtement.

Le substrat selon la présente invention présente notamment l'avantage de ne pas ou de faiblement changer de couleur lorsqu'il est trempé.

La variation du paramètre ΔE\* est de préférence inférieure à 2 et encore plus préférentiellement inférieure à 1.

De plus, la couche de revêtement présente notamment, après séchage à une température inférieure à 500°C, une adhésion sur le substrat mesurée au test de quadrillage selon la norme ISO 2409:2007 inférieure ou égale à 2, voire inférieure ou égale à 1.

Le substrat revêtu est « trempable » de telle manière que le substrat laqué peut remplir la norme de sécurité EN 12150-1 :2000.

La peinture minérale utilisée dans la présente invention est une solution aqueuse à base de silicate d'alcalins, encore connue sous le nom de verre liquide ou verre soluble. La peinture minérale comprend entre 15 et 45 % en masse de silicate de sodium, de silicate de potassium et/ou de silicate de lithium. De façon encore plus préférée, la teneur en silicate d'alcalin est comprise entre 15 et 25% en masse. Cette teneur en silicate modérée permet notamment d'obtenir l'opacité et la viscosité souhaitées.

Les silicates de sodium ou potassium sont préférés pour une question de coût des matières premières. De façon encore plus préférée, la peinture comprend entre 15 et 45 % en masse et préférentiellement entre 15 et 25% en masse de silicates de potassium. En effet, ces composés sont plus résistants à l'hydrolyse que les silicates de sodium et permettent par conséquent une meilleure tenue du revêtement.

La peinture comprend également au moins un pigment organique ou inorganique, permettant de donner la coloration souhaitée à la couche de revêtement. Le pigment peut être inorganique, de préférence sous forme de poudre, comme par exemple les oxydes de titane, de silicium, de cuivre, d'aluminium, de chrome, de cobalt, de fer, de manganèse et/ou baryum, le sulfure de zinc, de cérium et/ou de cadmium, les titanates de nickel et/ou de chrome, ou le vanadate de bismuth, en fonction de la coloration souhaitée.

Lorsque les pigments sont de nature à donner des teintes foncées, leur concentration est limitée. Ainsi de façon préférée, lorsque les pigments sont choisis parmi les oxydes de cuivre, de fer, de nickel et ou de cobalt, ils représentent moins de 20% en masse de la peinture minérale.

La peinture minérale comprend des charges minérales outre les pigments inorganiques, choisies parmi les silicates de magnésium tel que le talc, l'alumine, le calcaire, le kaolin, l'argile et le sulfate de baryum. La teneur en charges dans la composition de la couche peut aller jusqu'à 60% en masse.

Avantageusement, le ratio massique entre les silicates d'alcalins et les particules minérales est inférieur à 1/1, lesdites particules minérales étant constituées des charges minérales et des pigments inorganiques. De façon préférée, ce ratio est inférieur à 0,8/1 et encore plus préférentiellement à 0,66/1. La quantité de particules minérales présentes dans la peinture représente 1,25 fois, de préférence 1,5 fois, la quantité de silicates d'alcalins présents. Il est ainsi possible d'obtenir l'opacité recherchée du revêtement pour l'application souhaitée.

La peinture minérale peut comprendre en outre entre 0 et 5% en masse, de préférence moins de 3% en masse d'un agent dispersant, un agent anti-mousse, un agent épaississant, un agent stabilisant et/ou un agent durcisseur. Les agents dispersant, anti-mousse, épaississant peuvent être notamment présents à des teneurs comprises entre 0,01 et 5% en masse de la peinture, de préférence entre 0,01 et 1% en masse.

L'agent durcisseur peut notamment être un phosphate ou un hydroxyde d'aluminium. On citera par exemple les produits Fabutit® de la société Chemische Fabrik Budenheim KG.

Comme agent dispersant, on peut citer par exemple le composé Tego 740® de la société Evonik.

Comme agent anti-mousse, on peut citer par exemple le composé Foamex 825® de la société Evonik.

L'agent épaississant peut être par exemple le composé Betolin V30® de la société Woellner.

Comme agent stabilisant, on peut citer par exemple le composé Betolin Q40® de la société Woellner. La peinture minérale comprend un additif susceptible de libérer de l'oxygène lors du séchage de la couche ou de la trempe du produit, notamment lorsque le substrat est chauffé à une température supérieure à 350°C, permettant ainsi de limiter tout effet de noircissement dû au brûlage des produits organiques qui peuvent être présents en faible quantité via les additifs rhéologiques ou les impuretés des poudres inorganiques. Cet additif peut être choisi parmi un nitrate, un carbonate ou un sulfate d'alcalin. Cet additif existe dans une teneur comprise entre 0,01 et 5 % en masse, de préférence entre 0,1 et 3% en masse. De façon préférée, l'additif susceptible de libérer de l'oxygène est un nitrate d'alcalin, présent à une teneur comprise entre 0,1 et 3% en masse. Cet additif est très avantageusement compatible avec les critères Environnement, Hygiène et Sécurité actuellement en vigueur.

Lorsqu'on souhaite obtenir une coloration blanche, c'est-à-dire un revêtement possédant une clarté L* mesurée en réflexion supérieure ou égale à 60, la présence de l'additif susceptible de libérer de l'oxygène est nécessaire. Ainsi lorsque la clarté L* de la couche mesurée en réflexion est supérieure à 60, la peinture minérale comprend entre 0,1 et 3% en masse dudit additif.

La couche de revêtement présente l'avantage d'utiliser des matériaux facilement disponibles sur la surface terrestre, peu chers et compatibles avec les critères Environnement, Hygiène & Sécurité (EHS). La compatibilité avec les critères EHS est essentielle.

Avantageusement, la peinture minérale comprend des particules de taille inférieure à 5 $\mu$m, de préférence inférieure à 2 $\mu$m, pour augmenter l'opacité.

La couche de revêtement déposée le substrat a une épaisseur d'au moins 10 $\mu$m. Typiquement, la couche fait 50 $\mu$m d'épaisseur.

La présente invention porte également sur le procédé de fabrication d'un substrat en verre ou vitrocéramique laqué selon la revendication 10. Le dépôt de la couche de revêtement peut être effectué par toute technique connue de l'homme du métier relative au dépôt en voie liquide. On citera par exemple le dépôt par pulvérisation, par rouleau, par rideau, par enduction laminaire ou par sérigraphie.

L'étape de séchage est préférentiellement réalisée à une température inférieure à 500°C et encore plus préférentiellement inférieure à 400°C, voire inférieure à 200°C. Le temps de séchage est généralement inférieur à 15 min, préférentiellement inférieur à 10 min. La montée en température pendant l'étape de séchage est réalisée avec une rampe inférieure à 100°C/min, et de préférence comprise entre 70 et 90°C/min.

Les étapes a) et b) du procédé permettent d'obtenir un substrat laqué ayant un revêtement parfaitement adhérent et présentant une bonne résistance mécanique, tout en ayant l'aspect esthétique souhaité.

Le procédé de fabrication du substrat laqué peut en outre comprendre une étape ultérieure optionnelle de trempe thermique à une température d'au moins 550°C, si on souhaite le rendre conforme aux normes de sécurité.

La peinture minérale utilisée dans le procédé selon la présente invention est une solution aqueuse à base de silicate d'alcalins, encore connue sous le nom de verre liquide ou verre soluble. Elle comprend entre 15 et 45 % en masse et préférentiellement entre 15 et 25% en masse de silicate de sodium, de silicate de potassium et/ou de silicate de lithium. Les silicates de sodium ou potassium sont préférés pour une question de coût des matières premières. De façon encore plus préférée, la peinture comprend entre 15 et 45% en masse et préférentiellement entre 15 et 25% en masse, de silicates de potassium. La peinture comprend également au moins un pigment organique ou inorganique, permettant de donner la coloration souhaitée à la couche de revêtement. Le pigment peut être inorganique, de préférence sous forme de poudre, comme par exemple les oxydes de titane, de silicium, de cuivre, d'aluminium, de chrome, de cobalt, de fer, de manganèse et/ou baryum, le sulfure de zinc, de cérium et/ou de cadmium, les titanates de nickel et/ou de chrome, ou le vanadate de bismuth, en fonction de la coloration souhaitée.

La peinture minérale comprend des charges minérales choisies parmi les silicates de magnésium tel que le talc, l'alumine, le calcaire, le kaolin, l'argile et le sulfate de baryum. La teneur en charges dans la composition de la couche peut aller jusqu'à 60% en masse.

Avantageusement, le ratio massique entre les silicates d'alcalins et les particules minérales est inférieur à 1/1, lesdites particules minérales étant constituées des charges minérales et des pigments inorganiques. De façon préférée, ce ratio est inférieur à 0,8/1 et encore plus préférentiellement à 0,66/1. La quantité de particules minérales présentes dans la peinture représente 1,25 fois, de préférence 1,5 fois, la quantité de silicates d'alcalins présents. Il est ainsi possible d'obtenir l'opacité recherchée du revêtement pour l'application souhaitée

La peinture minérale peut comprendre en outre entre 0 et 5% en masse, de préférence moins de 3% en masse d'un agent dispersant, un agent anti-mousse, un agent épaississant, un agent stabilisant et/ou un agent durcisseur. Les agents dispersant, anti-mousse, épaississant peuvent être notamment présents à des teneurs inférieures à 1% en masse.

La peinture minérale comprend un additif susceptible de libérer de l'oxygène lors du séchage de la couche ou de la trempe du produit, notamment lorsque le substrat est chauffé à une température supérieure à 300°C, permettant ainsi de limiter tout effet de noircissement dû au brûlage des produits organiques qui peuvent être présents en faible quantité via les additifs rhéologiques ou les impuretés des poudres inorganiques. Cet additif peut être choisi parmi un nitrate, un carbonate ou un sulfate d'alcalin. Cet additif existe dans une teneur comprise entre 0,01 et 5 % en masse, de préférence entre 0,1 et 3% en masse.

Avantageusement, la peinture minérale comprend des particules de taille inférieure à 5 $\mu$m, de préférence inférieure à 2 $\mu$m, pour augmenter l'opacité. Les exemples ci-dessous illustrent l'invention, sans en limiter la portée.

Exemples

Exemple 1

Une composition de peinture minérale à base d'eau est préparée en mélangeant 20 % en masse d'une solution de silicate de potassium K42T® de la société Woellner, avec 28,6 % en masse d'eau et 10 % en masse d'oxyde de titane (pigment). Les additifs suivants sont également ajoutés :

- 7 % en masse de talc (Jetfine A1® de la société Rio Tinto Minerals)
- 30% en masse d'alumine (CTC 20® de la société Almatis)
- 3 % en en masse d'un agent durcisseur (Fabutit 206® de la société Chemische Fabrik Budenheim KG)
- 0,1% en masse d'un agent anti-mousse (Foamex 825® de la société Evonik)
- 0,1% en masse d'un agent épaississant (Betolin V30® de la société Woellner)
- 0,3% en masse d'un agent dispersant (Tego 740® de la société Evonik)
- 1% en masse de nitrate de potassium.

La composition ainsi préparée est appliquée au tire-film sur un substrat en verre, puis est séchée à 150 °C pendant 10 minutes.

La couche obtenue a une épaisseur d'environ 50 $\mu$m. Elle présente un L* mesurée en réflexion de 95,7. Elle est particulièrement dure et ne possède pas de rayures visibles côté verre lorsqu'on applique une force inférieure à 4 N au scléromètre. La couche de revêtement a une bonne adhérence au substrat en verre : on obtient une note de 1 au test normalisé de quadrillage (ISO2409:2007) et on n'observe aucun décollement au test d'adhésion réalisé en présence d'eau. Ce test développé par la société déposante consiste à immerger l'échantillon pendant 3 min dans de l'eau déminéralisée, puis à le sécher en tamponnant un chiffon sec à la surface de la peinture, puis à appliquer le scotch normalisé utilisé pour le test de quadrillage et à le retirer. Ce test permet d'apprécier l'adhésion lors des étapes de bordage et de lavage du verre laqué.

Le substrat ainsi revêtu peut être trempé à une température de 650°C, pendant 10 minutes, sans perte significative des caractéristiques de dureté, de coloration, ni d'adhésion. Notamment le changement de coloration $\Delta$E* entre les couches non-trempée et trempée est de 2,0.

Exemple 2

Une composition de peinture minérale à base d'eau est préparée en mélangeant 20 % en masse d'une solution de silicate de potassium K42T® de la société Woellner, avec 31,6 % en masse d'eau et 10 % en masse d'oxyde de titane (pigment). Les additifs suivants sont également ajoutés :

- 7 % en masse de talc (Jetfine A1 ® de la société Rio Tinto Minerals)
- 30% en masse d'alumine (CTC 20® de la société Almatis)
- 0,1% en masse d'un agent anti-mousse (Foamex 825® de la société Evonik)
- 0,1% en masse d'un agent épaississant (Betolin V30® de la société Woellner)
- 0,3% en masse d'un agent dispersant (Tego 740® de la société Evonik)
- 1% en masse de nitrate de potassium.

De la même manière que pour l'exemple 1, la composition ainsi préparée est appliquée au tire-film sur un substrat en verre, puis est séchée à 150°C pendant 10 minutes.

La couche obtenue a toujours une épaisseur d'environ 50 $\mu$m, et son L* mesuré en réflexion vaut 96,2. Elle ne conduit pas à des rayures visibles côté verre lorsqu'on applique une force inférieure à 48 N au scléromètre, elle obtient une note de 1 au test normalisé de quadrillage, et on n'observe aucun décollement au test d'adhésion réalisé en présence d'eau.

Le substrat ainsi revêtu peut toujours être trempé à une température de 650°C pendant 10 minutes sans perte significative des caractéristiques de dureté, de coloration, ni d'adhésion. Le $\Delta$E* entre les couches non-trempée et trempée est de 1,7, et la couche de revêtement ne présente aucune zone de noircissement, après trempe.

*Exemple comparatif*

A titre de comparaison, des tests similaires ont été réalisés sur le substrat en verre revêtu Lacobel T Cool White® de la société AGC dans sa forme non-trempée. La couche d'émail contient une importante quantité de résine lui permettant de résister aux rayures jusqu'à 4N. En revanche, cette couche adhère faiblement au substrat : note de 4 au test normalisé du quadrillage et décollement de 25% au test d'adhésion réalisé en présence d'eau. Le $\Delta E^*$ entre les couches non-trempée et trempée est par ailleurs de 6,1.

**Revendications**

1. Substrat laqué trempable en verre ou en vitrocéramique laqué muni sur la totalité ou une partie d'au moins une de ses faces d'une couche de revêtement opaque **caractérisé en ce que** ladite couche directement appliquée sur le substrat est une peinture minérale à base d'une solution aqueuse de silicate d'alcalin comprenant entre 15 et 45% en masse de silicate de sodium, de silicate de potassium et/ou de silicate de lithium, des charges minérales et au moins un pigment et un additif choisi parmi un nitrate, un carbonate ou un sulfate d'alcalin, la clarté de la couche étant telle que la composante L* mesurée en réflexion est supérieure ou égale à 20 et que l'écart de couleur entre le substrat revêtu de ladite couche avant trempe et le substrat revêtu de ladite couche après trempe est tel que le paramètre $\Delta E^*$, défini par

$$\Delta E^* = \sqrt{(\Delta L^*)^2 + (\Delta a^*)^2 + (\Delta b^*)^2} \,,$$

est inférieur ou égal à 5,0 , $\Delta L^*$, $\Delta a^*$ et $\Delta b^*$ représentant les variations des coordonnées colorimétriques L*, a* et b* mesurées sur le substrat revêtu avant et après trempe.

2. Substrat selon la revendication 1 **caractérisé en ce que** la peinture minérale est exempte de promoteur d'adhésion.

3. Substrat selon l'une des revendications 1 ou 2 **caractérisé en ce que** le pigment est organique ou inorganique.

4. Substrat selon l'une des revendications précédentes **caractérisé en ce que** les charges minérales sont choisies parmi les silicates de magnésium tel que le talc, l'alumine, le calcaire, le kaolin, l'argile et le sulfate de baryum.

5. Substrat selon l'une des revendications 3 ou 4 **caractérisé en ce que** le ratio massique entre les silicates d'alcalins et les particules minérales est inférieur à 1/1, lesdites particules minérales étant constituées des charges minérales et des pigments inorganiques.

6. Substrat selon l'une des revendications précédentes **caractérisé en ce que** la peinture minérale comprend en outre un agent dispersant, un agent antimousse, un agent épaississant, un agent stabilisant et/ou un agent durcisseur.

7. Substrat selon la revendication précédente **caractérisé en ce que** lesdits agents sont présents en une quantité comprise entre 0,01 et 5% en masse de la peinture, de préférence entre 0,01 et 1% en masse.

8. Substrat selon l'une des revendications précédentes **caractérisé en ce que** la peinture minérale comprend des particules de taille inférieure à 5 μm, de préférence inférieure à 2 μm.

9. Substrat selon l'une des revendications précédentes **caractérisé en ce que** la couche de peinture minérale a une épaisseur d'au moins 10 μm, de préférence au moins 50 μm.

10. Procédé de fabrication d'un substrat laqué trempable en verre ou en vitrocéramique selon l'une des revendications précédentes, **caractérisé en ce qu'**il comprend les étapes de

 a. dépôt d'une couche de revêtement à base d'une peinture minérale comprenant une solution aqueuse de silicate d'alcalin comprenant de 15 à 45% en masse de silicate de sodium, de silicate de potassium et/ou de silicate de lithium, des charges minérales, un additif choisi parmi le nitrate, le carbonate ou le sulfate d'alcalin et au moins un pigment sur la totalité ou une partie d'au moins une des faces dudit substrat, ladite peinture étant de préférence exempte de promoteur d'adhésion,
 b. séchage de ladite couche, en une seule étape, à une température telle que le substrat revêtu ne subisse aucune déformation mécanique et reste découpable.

11. Procédé selon la revendication 10 **caractérisé en ce que** l'étape de séchage est effectuée à une température inférieure à 500°C, préférentiellement inférieure à 400°C, et encore plus préférentiellement inférieure à 200°C.

**Patentansprüche**

1. Temperbares emailliertes Substrat aus Glas oder aus emaillierter Glaskeramik, das auf der Gesamtheit oder einem Teil von mindestens einer seiner Flächen mit einer undurchsichtigen Überzugsschicht versehen ist, **dadurch gekennzeichnet, dass** die unmittelbar auf das Substrat aufgebrachte Schicht eine Mineralfarbe auf Basis einer wässrigen Alkalisilikatlösung mit zwischen 15 und 45 Gewichts-% Natriumsilikat, Kaliumsilikat und/oder Lithiumsilikat, mineralischen Füllstoffen und mindestens einem Pigment und einem Zusatzstoff ist, der aus einem Alkalinitrat, Alkalicarbonat oder Alkalisulfat ausgewählt ist, wobei die Helligkeit der Schicht derart ist, dass die bei Reflexion gemessene Komponente L* größer gleich 20 beträgt und dass der Farbabstand zwischen dem mit der Schicht beschichteten Substrat vor dem Tempern und dem mit der Schicht beschichteten Substrat nach dem Tempern derart ist, dass der Parameter $\Delta E^*$, definiert durch

$$\Delta E^* = \sqrt{(\Delta L^*)^2 + (\Delta a^*)^2 + (\Delta b^*)^2},$$

größer gleich 5,0 beträgt, wobei $\Delta L^*$, $\Delta a^*$ und $\Delta b^*$ die an dem beschichteten Substrat vor und nach dem Tempern gemessenen Veränderungen der Farbkoordinaten L*, a* und b* darstellen.

2. Substrat nach Anspruch 1, **dadurch gekennzeichnet, dass** die Mineralfarbe keinen Haftvermittler aufweist.

3. Substrat nach einem der Ansprüche 1 oder 2, **dadurch gekennzeichnet, dass** das Pigment organisch oder anorganisch ist.

4. Substrat nach einem der vorhergehenden Ansprüche, **dadurch gekennzeichnet, dass** die mineralischen Füllstoffe ausgewählt sind aus Magnesiumsilikaten wie Talk, Aluminiumoxid, Kalkstein, Kaolin, Ton und Bariumsulfat.

5. Substrat nach einem der Ansprüche 3 oder 4, **dadurch gekennzeichnet, dass** das Massenverhältnis zwischen den Alkalisilikaten und den mineralischen Partikeln unter 1/1 beträgt, wobei die mineralischen Partikel aus den mineralischen Füllstoffen und den anorganischen Pigmenten bestehen.

6. Substrat nach einem der vorhergehenden Ansprüche, **dadurch gekennzeichnet, dass** die Mineralfarbe ferner ein Dispergiermittel, ein Antischaummittel, ein Verdickungsmittel, ein Stabilisierungsmittel und/oder ein Härtungsmittel umfasst.

7. Substrat nach dem vorhergehenden Anspruch, **dadurch gekennzeichnet, dass** die Mittel in einer Menge zwischen 0,01 und 5 Gewichts-% der Farbe, vorzugsweise zwischen 0,01 und 1 Gewichts-% vorliegen.

8. Substrat nach einem der vorhergehenden Ansprüche, **dadurch gekennzeichnet, dass** die Mineralfarbe Partikel mit einer Größe kleiner als 5 $\mu$m, vorzugsweise kleiner als 2 $\mu$m umfasst.

9. Substrat nach einem der vorhergehenden Ansprüche, **dadurch gekennzeichnet, dass** die Schicht aus Mineralfarbe eine Dicke von mindestens 10 $\mu$m, vorzugsweise mindestens 50 $\mu$m aufweist.

10. Verfahren zur Herstellung eines temperbaren emaillierten Substrats aus Glas oder aus Glaskeramik nach einem der vorhergehenden Ansprüche, **dadurch gekennzeichnet, dass** es folgende Schritte umfasst:

a. Aufbringen einer Überzugsschicht auf Basis einer Mineralfarbe mit einer wässrigen Alkalisilikatlösung mit zwischen 15 und 45 Gewichts-% Natriumsilikat, Kaliumsilikat und/oder Lithiumsilikat, mineralischen Füllstoffen und einem Zusatzstoff, der aus Alkalinitrat, Alkalicarbonat oder Alkalisulfat ausgewählt ist, und mindestens einem Pigment auf der Gesamtheit oder einem Teil von mindestens einer der Flächen des Substrats, wobei die Farbe vorzugsweise keinen Haftvermittler aufweist,

b. Trocknen der Schicht, in einem einzigen Schritt, bei einer derartigen Temperatur, dass das beschichtete Substrat nicht mechanisch verformt wird und schneidbar bleibt.

11. Verfahren nach Anspruch 10, **dadurch gekennzeichnet, dass** der Trocknungsschritt bei einer Temperatur unter 500 °C, vorzugsweise unter 400 °C und noch bevorzugter unter 200 °C durchgeführt wird.

**Claims**

1. A temperable lacquered substrate made of glass or lacquered glass-ceramic coated, over the entirety or some of at least one of its faces, with an opaque coating layer, **characterized in that** said layer, applied directly to the substrate, is a mineral paint based on an aqueous alkaline silicate solution comprising between 15 and 45% by weight sodium silicate, potassium silicate and/or lithium silicate, mineral fillers and at least one pigment and an additive chosen from a nitrate, a carbonate or an alkaline sulfate, the lightness of the layer being such that, measured in reflection, the L* component is higher than or equal to 20, and such that the color difference between the substrate coated with said layer before tempering and the substrate coated with said layer after tempering is such that the parameter $\Delta E^*$, de-

fined by

$$\Delta E* = \sqrt{\left(\Delta L*\right)^2 + \left(\Delta a*\right)^2 + \left(\Delta b*\right)^2}$$, is lower than or equal to 5.0, $\Delta L*$, $\Delta a*$ and $\Delta b*$ representing the variations in the L*, a* and b* color coordinates measured on the coated substrate before and after tempering.

2. The substrate as claimed in claim 1, **characterized in that** the mineral paint is devoid of adhesion promoter.

3. The substrate as claimed in either of claims 1 and 2, **characterized in that** the pigment is organic or inorganic.

4. The substrate as claimed in one of the preceding claims, **characterized in that** the mineral fillers are chosen from magnesium silicates such as talc, alumina, limestone, kaolin, clay and barium sulfate.

5. The substrate as claimed in either of claims 3 and 4, **characterized in that** the weight ratio of the alkaline silicates to the mineral particles is lower than 1:1, said mineral particles consisting of the mineral fillers and the inorganic pigments.

6. The substrate as claimed in one of the preceding claims, **characterized in that** the mineral paint furthermore comprises a dispersing agent, an antifoaming agent, a thickening agent, a stabilizing agent and/or a curing agent.

7. The substrate as claimed in the preceding claim, **characterized in that** said agents are present in an amount comprised between 0.01 and 5% by weight of the paint and preferably between 0.01 and 1% by weight.

8. The substrate as claimed in one of the preceding claims, **characterized in that** the mineral paint comprises particles that are smaller than 5 $\mu$m and preferably smaller than 2 $\mu$m in size.

9. The substrate as claimed in one of the preceding claims, **characterized in that** the layer of mineral paint has a thickness of at least 10 $\mu$m and preferably at least 50 $\mu$m.

10. A process for manufacturing a temperable lacquered substrate made of glass or glass-ceramic as claimed in one of the preceding claims, **characterized in that** it comprises steps of:

    a. depositing a coating layer based on a mineral paint comprising an aqueous alkaline silicate solution comprising between 15 and 45% by weight sodium silicate, potassium silicate and/or lithium silicate, mineral fillers, an additive chosen from a nitrate, a carbonate or an alkaline sulfate and at least one pigment over the entirety or some of at least one of the faces of said substrate, said paint preferably being devoid of adhesion promoter; and

    b. drying said layer, in a single step, at a temperature such that the coated substrate undergoes no mechanical deformation and remains cuttable.

11. The process as claimed in claim 10, **characterized in that** the drying step is carried out at a temperature below 500°C, preferably below 400°C and even more preferably below 200°C.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2007104752 A
- WO 2011095471 A
- WO 2007135192 A
- WO 2011051459 A
- WO 2006111359 A
- US 5510188 A
- EP 0815176 A
- EP 0946654 A